# EUROPÄISCHE PATENTSCHRIFT

(11) **EP 3 950 508 B1**
(45) Veröffentlichungstag und Bekanntmachung des Hinweises auf die Patenterteilung: **27.05.2026**
(21) Anmeldenummer: 21185185.2
(22) Anmeldetag: 13.07.2021
(51) Int. Cl.: B64D 29/06, E05C 3/04

(54) **VERRIEGELUNGSEINRICHTUNG**
LOCKING DEVICE
DISPOSITIF DE VERROUILLAGE

(30) Priorität: 07.08.2020 DE 102020210057
(43) Veröffentlichungstag der Anmeldung: 09.02.2022
(73) Patentinhaber: SACS Aerospace GmbH, 72186 Empfingen (DE)
(72) Erfinder: Rapp, Andreas, 72175 Dornhan (DE); Halfeev, Albert, 72336 Balingen (DE)
(74) Vertreter: Patentanwälte Magenbauer & Kollegen Partnerschaft mbB

(56) Entgegenhaltungen:
- DE-U1- 202020 104 021
- US-A1- 2015 232 189
- US-B1- 6 606 889

## Beschreibung

Die Erfindung betrifft eine Verriegelungseinrichtung zur zeitweiligen, lösbaren Kopplung eines ersten Bauteils mit einem zweiten Bauteil.

Verriegelungseinrichtungen werden beispielsweise im Flugzeugbau dazu eingesetzt, in der Flugzeugkabine bewegliche Verkleidungsteile an Tragelementen oder festen Verkleidungsteilen lösbar zu verriegeln, insbesondere um Bereiche, die von den beweglichen Verkleidungsteilen verdeckt werden, für Wartungs- oder Reparaturzwecke zugänglich zu machen. Da es während eines Betriebs eines Flugzeugs innerhalb der Flugzeugkabine zu Druckschwankungen kommen kann, besteht für manche beweglichen Verkleidungsteile die Notwendigkeit, eine Verriegelung mit einem Trageelement oder einem festen Verkleidungsteil derart auszubilden, dass bei einem Auftreten von Druckunterschieden zwischen dem vom beweglichen Verkleidungsteil verdeckten Bereich und einem daran angrenzenden Bereich eine selbsttätige Öffnungsbewegung für das bewegliche Verkleidungsteil ermöglicht wird.

Die US 2015 023 2189 A1 offenbart eine Überdruckverriegelung mit einem drehbaren Bolzen, der eine erste Platte sichert, die an eine zweite Platte angrenzt, an der die Verriegelung befestigt ist. Der Bolzen wird durch ein Kniehebelgestänge gehalten, das an einem Ende des Bolzens gegen eine druckbetätigte Feder wirkt. Das Gestänge gibt den Bolzen frei, wenn eine übermäßige Öffnungskraft gegen den Bolzen eine ausgewählte Haltekraft der Feder überschreitet. Wenn dieser Zustand eintritt, hat das Gestänge die Feder ausgelenkt und sich in eine Position bewegt, in der das Ende des Gestänges, das gegen die Feder drückt, seine mechanische Hebelwirkung in Bezug auf den Bolzen verliert. Danach kann sich der Bolzen frei weiterdrehen, bis er vollständig geöffnet ist. Der Verschluss umfasst auch einen manuellen Auslöser, der das Haltegestänge deaktiviert und eine freie Drehung des Bolzens in die vollständig geöffnete Position ermöglicht, wenn dieser Auslöser betätigt wird.

Die US 6 606 889 B1 offenbart eine Hebelverriegelung zum lösbaren Verriegeln einer Tür an einem entsprechenden Türrahmen umfasst ein Gehäuse mit einem darin schwenkbar gelagerten Griff, der zwischen einer geöffneten und einer geschlossenen Position drehbar ist. In der geschlossenen Position des Griffs greift ein am Griff angebrachter Riegel in den Türrahmen ein, und in der geöffneten Position des Griffs wird der Riegel aus dem Türrahmen gelöst. Das Gehäuse umfasst einen darin schwenkbar gelagerten Auslöser, der zwischen einer ersten Position, um den Griff in der geschlossenen Position zu halten, und einer zweiten Position, um den Griff in die geöffnete Position zu entriegeln, schwenkbar ist. Eine Klinke ist drehbar an einem Schließzylinder am Gehäuse angebracht und zwischen einer verriegelten und einer entriegelten Position drehbar, um den Auslöser in die zweite Position zu schwenken bzw. zu verhindern, dass der Auslöser in die zweite Position geschwenkt wird.

Die Aufgabe der Erfindung besteht darin, eine Verriegelungseinrichtung bereitzustellen, die unter Beibehaltung des bekannten Funktionsumfangs eine vereinfachte Bauweise verwirklicht.

Diese Aufgabe wird für eine Verriegelungseinrichtung, die zur zeitweiligen, lösbaren Kopplung eines ersten Bauteils mit einem zweiten Bauteil ausgebildet ist, mit den folgenden Merkmalen gelöst. Die Verriegelungseinrichtung weist einen Grundkörper auf, der zur Festlegung an einem ersten Bauteil ausgebildet ist und der eine erste Lagereinrichtung, eine zweite Lagereinrichtung und eine dritte Lagereinrichtung umfasst. Ferner weist die Verriegelungseinrichtung einen an der ersten Lagereinrichtung schwenkbeweglich um eine erste Schwenkachse zwischen einer Verriegelungsstellung für ein zweites Bauteil und einer Entriegelungsstellung für das zweite Bauteil verschwenkbaren Schwenkhebel und eine an der zweiten Lagereinrichtung beweglich gelagerten Riegeleinrichtung auf, die ein federelastisch abgestütztes Riegelteil aufweist, das in einer Riegelstellung der Riegeleinrichtung zur Anlage am Schwenkhebel ausgebildet ist, um in der Verriegelungsstellung des Schwenkhebels eine vorgebbare Bremskraft auf den Schwenkhebel zu übertragen. Zudem weist die Verriegelungseinrichtung eine an der dritten Lagereinrichtung beweglich gelagerte Freigabeeinrichtung auf, die in einer Blockierstellung für eine Blockierung der Riegeleinrichtung in der Riegelstellung und in einer Freigabestellung für eine Freigabe der Riegeleinrichtung aus der Riegelstellung ausgebildet ist.

Die zentrale Funktion der Verriegelungseinrichtung besteht in der lösbaren Kopplung des ersten Bauteils mit dem zweiten Bauteil, wobei davon ausgegangen wird, dass das erste Bauteil über wenigstens eine Gelenkverbindung wie beispielsweise ein Scharnier mit dem zweiten Bauteil verbunden ist und dass das erste Bauteil in der Art einer Türe oder Wartungsklappe zum Verschließen einer Ausnehmung im zweiten Bauteil eingesetzt wird. Die Verriegelungseinrichtung wird hierbei dazu eingesetzt, das erste Bauteil in einer Schließstellung, in der die Ausnehmung im zweiten Bauteil verschlossen ist, gegenüber dem zweiten Bauteil zu halten. Ferner ermöglicht die Verriegelungseinrichtung eine manuelle, vorzugsweise werkzeuglose, Betätigung durch einen Bediener. Hierzu ist vorgesehen, dass der Bediener eine Bedienkraft, insbesondere eine Druckkraft, auf die Freigabeeinrichtung ausübt, um diese aus der Blockierstellung in eine Freigabestellung zu überführen. Hierdurch wird eine Blockierung der Riegeleinrichtung aufgehoben, so dass die Riegeleinrichtung aus der Riegelstellung in eine Freigabestellung bewegt werden kann. In der Freigabestellung der Riegeleinrichtung ist eine Wirkverbindung zwischen dem federelastisch abgestützten Riegelteil der Riegeleinrichtung und dem Schwenkhebel aufgehoben, so dass die Riegeleinrichtung keine Bremskraft auf den Schwenkhebel ausübt und der Schwenkhebel entweder durch eine Betätigungsbewegung eines Bedieners oder durch eine Federeinrichtung aus der Verriegelungsstellung in die Entriegelungsstellung bewegt werden kann. In dieser Entriegelungsstellung wird eine Relativbewegung zwischen dem ersten Bauteil und dem zweiten Bauteil ermöglicht.

Zudem ermöglicht die Verriegelungseinrichtung eine selbsttätige Entkopplung des ersten Bauteils vom zweiten Bauteil. Hierbei wird davon ausgegangen, dass eine Krafteinwirkung auf das erste Bauteil vorliegt, die eine vorgebbare maximale Haltekraft der Verriegelungseinrichtung übersteigt. Dies kann beispielsweise dann der Fall sein, wenn das erste Bauteil und das zweite Bauteil zur Abtrennung eines ersten Raumabschnitts von einem zweiten Raumabschnitt eingesetzt werden und aufgrund einer Druckdifferenz zwischen dem ersten Raumabschnitt und dem zweiten Raumabschnitt eine Druckkraft auf das erste Bauteil einwirkt, die oberhalb eines vorgegebenen Kraftniveaus liegt. In diesem Fall gewährleistet die Verriegelungseinrichtung aufgrund der vorgebbaren und begrenzten Bremskraft, die von der Riegeleinrichtung auf den Schwenkhebel übertragen wird, eine Aufhebung der Kopplung zwischen dem ersten Bauteil und dem zweiten Bauteil. Hierbei ist insbesondere vorgesehen, dass ein auf den Schwenkhebel aufgrund der Kopplung des ersten Bauteils mit dem zweiten Bauteil einwirkendes Drehmoment größer als ein Bremsmoment ist, das von der Bremskraft bestimmt wird, die von der Riegeleinrichtung auf den Schwenkhebel ausgeübt wird. Sofern diese Situation beispielsweise durch eine auf das erste Bauteil einwirkende Druckkraft hervorgerufen wird, findet eine Schwenkbewegung des Schwenkhebels aus der Verriegelungsstellung in die Entriegelungsstellung statt, ohne dass hierfür eine Bewegung der Riegeleinrichtung und/oder der Freigabeeinrichtung erforderlich wäre. Vielmehr ist es ausreichend, wenn entweder eine vom federelastisch abgestützten Riegelteil auf den Schwenkhebel ausgeübte Reibkraft überwunden wird oder wenn eine bezüglich der Schwenkbewegung des Schwenkhebels zwischen dem Riegelteil und dem Schwenkhebel in der Verriegelungsstellung vorliegende formschlüssige Kopplung durch eine Relativbewegung des Riegelteils gegenüber dem Schwenkhebel aufgehoben wird.

Erfindungsgemäß ist vorgesehen, dass die Riegeleinrichtung ein Riegelgehäuse umfasst, das beweglich, bevorzugt linearbeweglich, besonders bevorzugt schwenkbeweglich um eine zweite Schwenkachse, an der, insbesondere als Lagerzapfen ausgebildeten, zweiten Lagereinrichtung aufgenommen ist und dass im Riegelgehäuse eine quer zur zweiten Schwenkachse ausgerichtete und beabstandet zur zweiten Schwenkachse angeordnete Ausnehmung zur Aufnahme einer Federeinrichtung und des Riegelteils ausgebildet ist, wobei das Riegelteil mit einem Riegelbereich über eine Außenoberfläche des Riegelgehäuses abragt. Durch die schwenkbewegliche Lagerung des Riegelgehäuses an der zweiten Lagereinrichtung ist eine kostengünstige Bereitstellung der Relativbeweglichkeit für die Riegeleinrichtung gewährleistet. Vorzugsweise ist die zweite Lagereinrichtung als Lagerzapfen ausgebildet, der am Grundkörper festgelegt ist und der eine korrespondierende Ausnehmung, insbesondere eine kreiszylindrische Bohrung, im Riegelgehäuse durchsetzt. Das Riegelgehäuse weist eine Ausnehmung auf, in der eine Federeinrichtung und ein Riegelteil aufgenommen sind. Die Aufgabe der mit einer inneren Vorspannung im Riegelgehäuse aufgenommenen Federeinrichtung besteht darin, eine Federkraft auf das Riegelteil auszuüben, damit das Riegelteil innerhalb eines vorgebbaren Kraftintervalls in einer Vorzugsstellung relativ zum Riegelgehäuse gehalten werden kann. Das von der Federeinrichtung bestimmte Kraftintervall für das Riegelteil ist davon abhängig, welche Bremskraft vom Riegelteil auf den Schwenkhebel ausgeübt werden soll. Diese Bremskraft ist zum einen davon abhängig, unter welchen Randbedingungen eine selbsttätige Auslösung des Schwenkhebels stattfinden können soll, ohne dass hierzu eine Betätigung der Riegeleinrichtung und der Freigabeeinrichtung stattfindet. Zum anderen ist die Bremskraft davon abhängig, in welcher Weise eine Kraftübertragung vom Riegelteil auf den Schwenkhebel vorgesehen ist. Eine Kraftübertragung kann beispielsweise ausschließlich reibschlüssig vorgesehen sein, so dass die vom Riegelteil auf den Schwenkhebel übertragene Bremskraft von einer Materialpaarung des Riegelteils und des Schwenkhebels und eines davon abhängigen Reibungskoeffizienten sowie von einer Normalkraft, die vom Riegelteil in einer Normalenrichtung auf den Schwenkhebel übertragen wird, abhängt. Alternativ kann eine kombinierte reibschlüssige und formschlüssige Kraftübertragung vorgesehen sein, bei der das Riegelteil bereichsweise in eine Ausnehmung im Schwenkhebel eingreift, so dass für eine Schwenkbewegung des Schwenkhebels gegenüber dem Riegelteil sowohl eine Überwindung der in diesem Fall ebenfalls zu berücksichtigenden Reibungskräfte als auch eine Verlagerung des Riegelteils gegen die innere Vorspannung der Federeinrichtung erforderlich ist. Eine solche kombinierte reibschlüssige und formschlüssige Kraftübertragung zwischen dem Riegelteil und dem Schwenkhebel hat den Vorteil, dass durch Einflussnahme auf die Geometrie des Riegelteils, die in unmittelbaren Kontakt mit dem Schwenkhebel, insbesondere mit einer im Schwenkhebel ausgebildeten Ausnehmung steht, ein wesentlicher Bestandteil der Bremskraft bestimmt werden kann. Demgegenüber kann der Einfluss der Reibungskräfte zwischen Riegelteil und Schwenkhebel deutlich geringer gehalten werden, wodurch eine präzisere Abstimmung des Auslöseverhaltens für die Verriegelungseinrichtung vorgenommen werden kann.

Bevorzugt ist vorgesehen, dass der Riegelbereich in eine korrespondierend ausgebildete Ausnehmung im Schwenkhebel eingreift, die in einer Schwenkhebelstirnfläche des Schwenkhebels ausgebildet ist, wobei eine Flächennormale der Schwenkhebelstirnfläche quer zur ersten Schwenkachse ausgerichtet ist. Durch die Anpassung der Ausnehmung im Schwenkhebel an die Geometrie des Riegelbereichs, der in der Riegelstellung der Riegeleinrichtung und der Verriegelungsstellung des Schwenkhebels in Kontakt mit dem Schwenkhebel steht, ist eine vorteilhafte Vorgabe der Bremskraft, die vom Riegelteil auf den Schwenkhebel in der Riegelstellung der Riegeleinrichtung und der Verriegelungsstellung des Schwenkhebels übertragen werden soll, in einem engen Toleranzband möglich. Vorzugsweise sind eine Geometrie des Ringbereichs, der in der Ausnehmung im Schwenkhebel aufgenommen ist und eine Geometrie der Ausnehmung im Schwenkhebel geometrisch ähnlich, insbesondere identisch. Bevorzugt ist vorgesehen, dass eine Justierung der Bremskraft durch eine Variation der inneren Vorspannung der Federeinrichtung, die das Riegelteil gegen den Schwenkhebel presst, vorgenommen wird.

Bei einer Ausgestaltung der Erfindung ist vorgesehen, dass die Freigabeeinrichtung schwenkbeweglich um eine dritte Schwenkachse an der dritten Lagereinrichtung gelagert ist und eine dritte Stirnfläche aufweist, deren Flächennormale quer zur dritten Schwenkachse ausgerichtet ist, wobei die dritte Stirnfläche in der Blockierstellung für eine Anlage an einem Vorsprung der Riegeleinrichtung ausgebildet ist, der eine parallel zur dritten Schwenkachse ausgerichtete größte Erstreckung aufweist, um eine Bewegung, bevorzugt eine Linearbewegung, besonders bevorzugt eine Schwenkbewegung der Riegeleinrichtung, aus der Riegelstellung zu verhindern. Die Aufgabe der Freigabeeinrichtung besteht darin, eine Schwenkbewegung der Riegeleinrichtung aus der Riegelstellung zu ermöglichen, sofern dies von einem Bediener durch Einleiten einer Freigabebewegung auf die Freigabeeinrichtung bewirkt wird. Durch die schwenkbewegliche Lagerung der Freigabeeinrichtung am Grundkörper mittels der dritten Lagereinrichtung kann eine kostengünstige Verwirklichung der Relativbeweglichkeit zwischen Freigabeeinrichtung und Grundkörper gewährleistet werden. Im Hinblick auf die Blockierung der Riegeleinrichtung in der Riegelstellung, die durch die Freigabeeinrichtung in Abwesenheit einer Bedienkraft eines Bedieners gewährleistet werden soll, ist es vorteilhaft, wenn eine dritte Stirnfläche der Freigabeeinrichtung derart ausgerichtet ist, das eine Krafteinwirkung, die von der Riegeleinrichtung auf die Freigabeeinrichtung übertragen wird, nicht zu einer unerwünschten Verlagerung der Freigabeeinrichtung aus der Blockierstellung führt. Hierzu ist vorgesehen, dass eine Flächennormale der dritten Stirnfläche quer zur dritten Schwenkachse ausgerichtet ist. Durch diese Gestaltung wird erreicht, dass bei einer Krafteinwirkung auf die dritte Stirnfläche, die insbesondere in Richtung der Flächennormalen der dritte Stirnfläche erfolgt, kein unerwünschtes Drehmoment auf die Freigabeeinrichtung hervorgerufen wird, womit eine ebenfalls unerwünschte Auslenkung der Freigabeeinrichtung aus der Blockierstellung vermieden wird. Um eine solche parallel zur Flächennormalen der dritte Stirnfläche ausgerichtete Krafteinleitung für die Freigabeeinrichtung sicherzustellen, ist zusätzlich vorzusehen, dass eine erste Stirnfläche der Riegeleinrichtung, die in der Riegelstellung der Riegeleinrichtung und der Blockierstellung der der Freigabeeinrichtung gegenüberliegend zur dritten Stirnfläche der Freigabeeinrichtung derart ausgerichtet ist, dass auch bei Einleitung eines Drehmoments auf die Riegeleinrichtung eine aus diesen Drehmoment resultierende Kraft auf die dritte Stirnfläche der Freigabeeinrichtung einwirkt, die koaxial zur Flächennormale der dritten Stirnfläche ausgerichtet ist.

Vorteilhaft ist es, wenn eine Projektion der dritten Stirnfläche auf eine Projektionsebene, die quer zu einer Flächennormalen der dritten Stirnfläche ausgerichtet ist, die dritte Schwenkachse schneidet, insbesondere dass die Flächennormale der dritten Stirnfläche die dritte Schwenkachse schneidet. Vorzugsweise ist die dritte Stirnfläche als ebenes Rechteck ausgebildet, so dass auch eine Projektion der dritten Stirnfläche in eine Projektionsebene, die in einem rechten Winkel, also quer, zur Flächennormale ausgerichtet ist, als Rechteck ausgebildet ist. Dementsprechend umfasst dieses Rechteck die dritte Schwenkachse, deren Länge zumindest in mathematischer Hinsicht unendlich ist, so dass für diesen Fall die Formulierung gewählt wird, dass die Projektion der dritten Stirnfläche die dritte Schwenkachse schneidet. Besonders vorteilhaft ist es, wenn die Flächennormale der dritten Stirnfläche die dritte Schwenkachse schneidet. Vorzugsweise wird in diesem Zusammenhang davon ausgegangen, dass die Flächennormale von einem Mittelpunkt oder Schwerpunkt der dritten Stirnfläche ausgeht. Bei einer gekrümmten dritten Stirnfläche kann eine resultierende Flächennormale ermittelt werden, die beispielsweise anhand eines Flächenschwerpunkts und einem von diesem Flächenschwerpunkt ausgehenden Gewichtskraftvektor definiert werden kann.

Bei einer Weiterbildung der Erfindung ist vorgesehen, dass das Riegelgehäuse derart zwischen der zweiten und der dritten Schwenkachse angeordnet ist, dass eine Schwenkbewegung der Riegeleinrichtung zwischen der Riegelstellung und einer Freigabestellung und eine Schwenkbewegung der Freigabeeinrichtung zwischen der Blockierstellung und der Freigabestellung gleichsinnig in einer ersten Schwenkrichtung erfolgen und dass der Schwenkhebel derart angeordnet ist, dass eine Schwenkbewegung des Schwenkhebels aus der Verriegelungsstellung in die Entriegelungsstellung in einer der ersten Schwenkrichtung entgegengesetzten zweiten Schwenkrichtung erfolgt. Vorzugsweise ist vorgesehen, dass die Riegeleinrichtung und die Freigabeeinrichtung derart aufeinander angepasst sind, dass bei einer Betätigung der Freigabeeinrichtung in Form einer Schwenkbewegung um die dritte Schwenkachse eine gleichsinnige Schwenkbewegung der Riegeleinrichtung um die zweite Schwenkachse erfolgt, wobei sowohl ein Schwenkwinkel für die Riegeleinrichtung als auch ein Schwenkwinkel für die Freigabeeinrichtung in einem Winkelintervall kleiner 20 Grad liegen. Ferner kann vorgesehen sein, dass Geometrien der Riegeleinrichtung und der Freigabeeinrichtung derart aneinander angepasst sind, dass eine gegenseitige Schwenkwinkelbegrenzung für die Schwenkbewegungen der Riegeleinrichtung und der Freigabeeinrichtung gewährleistet ist. Besonders vorteilhaft ist es, wenn die dritte Stirnfläche der Freigabeeinrichtung in der Freigabestellung der Blockiereinrichtung und der Freigabeeinrichtung an einem korrespondierenden Oberflächenabschnitt der Riegeleinrichtung anliegt, wodurch die gewünschte Schwenkwinkelbegrenzung für die Schwenkbewegungen der Riegeleinrichtung und der Freigabeeinrichtung erreicht wird.

Vorteilhaft ist es, wenn die erste Schwenkachse, die zweite Schwenkachse und die dritte Schwenkachse parallel zueinander ausgerichtet sind.

In weiterer Ausgestaltung der Erfindung ist vorgesehen, dass der Freigabeeinrichtung und der Riegeleinrichtung eine Federeinrichtung zugeordnet ist, die für eine Einleitung von gegenläufig ausgerichteten Drehmomenten auf die Freigabeeinrichtung und die Riegeleinrichtung ausgebildet ist und/oder dass dem Schwenkhebel eine Federanordnung zugeordnet ist, die für eine Bereitstellung eines in die Freigabestellung gerichteten Drehmoments auf den Schwenkhebel ausgebildet ist. Vorzugsweise ist vorgesehen, dass eine der Freigabeeinrichtung und der Riegeleinrichtung zugeordnete Federeinrichtung ein Drehmoment auf die Freigabeeinrichtung ausübt, das dazu führt, dass die Freigabeeinrichtung in die Blockierstellung vorgespannt ist, während die Riegeleinrichtung in die Freigabestellung vorgespannt ist. Dementsprechend führt eine Auslenkung der Freigabeeinrichtung aus der Blockierstellung in eine Freigabestellung, wie sie durch Krafteinleitung seitens eines Benutzers bewirkt werden kann, zu einer selbsttätigen Schwenkbewegung der Riegeleinrichtung aus der Riegelstellung in die Freigabestellung. Hierdurch wird die Übertragung der Bremskraft von der Riegeleinrichtung, insbesondere vom Riegelteil, auf den Schwenkhebel, aufgehoben. Der Schwenkhebel ist vorzugsweise mit einer Federanordnung verbunden, die derart vorgespannt ist, das der Schwenkhebel unter Reduzierung der inneren Vorspannung der Federanordnung aus der Verriegelungsstellung in die Entriegelungsstellung überführt wird.

Zweckmäßig ist es, wenn der Schwenkhebel in der Verriegelungsstellung mit einem ersten Endbereich auf einem Gehäuseabschnitt des Riegelgehäuses aufliegt und/oder dass der Vorsprung der Riegeleinrichtung in der Freigabestellung der Freigabeeinrichtung an einer benachbart zur dritten Stirnfläche der Freigabeeinrichtung angeordneten Stützfläche anliegt. Durch diese Ausgestaltung des Schwenkhebels und des Riegelgehäuses wird erreicht, dass nach einer manuellen Auslösung der Verriegelungseinrichtung, bei der sowohl der Schwenkhebel aus der Verriegelungsstellung in die Entriegelungsstellung verschwenkt ist als auch eine gleichsinnige Verschwenkung der Freigabeeinrichtung und der Riegeleinrichtung vorliegt, bei einer Schwenkbewegung des Schwenkhebels in Richtung der Verriegelungsstellung auch eine korrespondierende, insbesondere gegensinnige, Schwenkbewegung der Riegeleinrichtung aus der Freigabestellung in die Riegelstellung hervorgerufen wird. Vorzugsweise sind der Schwenkhebel und die Riegeleinrichtung derart aufeinander angepasst, dass bei der Verschwenkung des Schwenkhebels aus der Entriegelungsstellung in die Verriegelungsstellung, wozu ohnehin eine Krafteinleitung auf den Schwenkhebel zur Erhöhung der inneren Vorspannung der Federanordnung erforderlich ist, eine Kraftübertragung auf die Riegeleinrichtung stattfindet, wodurch die Riegeleinrichtung ebenfalls unter Erhöhung der inneren Vorspannung der zugeordneten Federeinrichtung aus der Freigabestellung in die Riegelstellung überführt werden kann. Besonders vorteilhaft ist es, wenn im Zuge der Schwenkbewegung der Riegeleinrichtung in die Riegelstellung die Freigabeeinrichtung ebenfalls aufgrund der inneren Vorspannung der zugeordneten Federeinrichtung ohne weiteres Zutun des Benutzers die Blockierstellung gegenüber der Riegeleinrichtung einnimmt. Bei einer derartigen Ausgestaltung der Verriegelungseinrichtung wird somit mit einer einzigen Betätigungsbewegung sowohl die Kopplung zwischen dem ersten Bauteil und dem zweiten Bauteil als auch die Überführung der beweglichen Komponenten Schwenkhebel, Riegeleinrichtung und Freigabeeinrichtung der Verriegelungseinrichtung in die jeweilige Funktionsstellung bewegt, in der die gewünschte Kopplung zwischen dem ersten Bauteil und dem zweiten Bauteil so lange aufrechterhalten wird, bis entweder eine manuelle Auslösung oder eine automatisierte Auslösung der Verriegelungseinrichtung eintritt.

Bevorzugt ist vorgesehen, dass der Schwenkhebel bei Überwindung der vom federelastisch abgestützten Riegelteil ausgeübten Bremskraft ohne eine Bewegung der Riegeleinrichtung aus der Riegelstellung und ohne eine Bewegung der Freigabeeinrichtung aus der Blockierstellung aus der Verriegelungsstellung in die Entriegelungsstellung verlagerbar ist. Zur Wahrnehmung dieser Funktion ist das federelastisch abgestützte Riegelteil vorgesehen, das in Abhängigkeit von einer Ausgestaltung des Schwenkhebels entweder eine in Form einer Reibkraft übertragene Bremskraft oder eine als Kombination einer Reibkraft und einer aufgrund der formschlüssigen Kopplung zwischen dem Riegelteil und dem Schwenkhebel bei der Auslenkung des Schwenkhebels aus der Verriegelungsstellung in die Entriegelungsstellung auftretenden Deformationskraft für die Federeinrichtung der Riegeleinrichtung übertragene Bremskraft bereitstellt.

Besonders bevorzugt ist vorgesehen, dass der Schwenkhebel einstückig ausgebildet ist, so dass keine Aufteilung zwischen einem zur Anlage am zweiten Bauteil vorgesehenen Abschnitts des Schwenkhebels und einem zur Betätigung durch einen Bediener vorgesehenen Abschnitt des Schwenkhebels vorliegt. Der endseitig am Schwenkhebel angeordnet, für einen unmittelbaren Kontakt mit dem zweiten Bauteil vorgesehene Gegenhalter ist von dieser Definition nicht mit umfasst, da dieser vorzugsweise eine veränderliche Positionierung gegenüber dem Schwenkhebel ermöglichen soll, um eine Justierung der Verriegelungseinrichtung zu ermöglichen.

Bei einer alternativen Ausgestaltung der Verriegelungseinrichtung ist vorgesehen, dass das Riegelgehäuse linearbeweglich am Grundkörper gelagert ist und dass ein am Grundkörper abgestütztes Federmittel für eine Bereitstellung einer in Richtung der Freigabeeinrichtung ausgerichteten Federkraft ausgebildet ist. Bei einer Bewegung der Freigabeeinrichtung aus der Blockierstellung in die Freigabestellung wird somit eine lineare Bewegung des Riegelgehäuses ermöglicht, wobei sich der Riegelbereich der Riegeleinrichtung in einer Weise vom Schwenkhebel entfernt, dass dieser ohne größeren Kraftaufwand aus der Verriegelungsstellung verschwenkt werden kann. Hierbei kommt es zu einer Entspannung des am Grundkörper abgestürzten Federmittels, wobei vorzugsweise vorgesehen ist, dass das Federmittel auch in der Freigabestellung eine innere Vorspannung aufweist, um eine definierte Positionierung für die Riegeleinrichtung zu gewährleisten.

Bei einer Weiterbildung der Verriegelungseinrichtung ist vorgesehen, dass am Riegelgehäuse eine erste Steuerfläche ausgebildet ist und dass am Schwenkhebel eine zweite Steuerfläche ausgebildet ist, die für eine Einleitung einer Kompressionsbewegung auf das Federmittel bei der Überführung des Schwenkhebels aus der Entriegelungsstellung in die Verriegelungsstellung ausgebildet sind. Durch die Wechselwirkung zwischen der ersten Steuerfläche und der zweiten Steuerfläche erfährt das Riegelgehäuse bei der Überführung des Schwenkhebels aus der Entriegelungsstellung in die Verriegelungsstellung eine lineare Zwangsbewegung entgegen der Federkraft des Federmittels und wird somit wieder in seine Riegelstellung überführt. Hierdurch wird eine besonders komfortable Betätigung der Verriegelungseinrichtung gewährleistet.

Bevorzugt ist vorgesehen, dass die erste Steuerfläche kreiszylindrisch ausgebildet ist und eine Mittelachse der ersten Steuerfläche parallel zur Mittelachse der ersten Lagereinrichtung ausgerichtet ist und dass die zweite Steuerfläche als Ebene oder als Abschnitt einer zylindrischen Mantelfläche ausgebildet ist. Beispielhaft wird die erste Steuerfläche von einer mit der Riegeleinrichtung verbundenen Bolzen gebildet, der eine Mittelachse aufweist, die parallel zur Mittelachse der ersten Lagereinrichtung ausgerichtet ist. Besonders bevorzugt ist dieser Bolzen an einem Ausleger festgelegt, der längs einer linearen Bewegungsachse für die Riegeleinrichtung und in Richtung der ersten Lagereinrichtung erstreckt ist. U

Eine vorteilhafte Ausführungsform der Erfindung ist in der Zeichnung dargestellt. Hierbei zeigt:
- Figur 1: eine perspektivische Ansicht von oben auf eine Verriegelungseinrichtung, bei der sich ein Schwenkhebel in einer Verriegelungsstellung und eine Regeleinrichtung sowie eine Freigabeeinrichtung in einer Blockierstellung befinden,
- Figur 2: eine seitliche Schnittdarstellung der Verriegelungseinrichtung gemäß der Figur 1,
- Figur 3: die Verriegelungseinrichtung gemäß den Figuren 1 und 2, bei der sich die Riegeleinrichtung und die Freigabeeinrichtung in einer Freigabestellung befinden, in der eine Schwenkbewegung des Schwenkhebels ermöglicht wird,
- Figur 4: die Verriegelungseinrichtung gemäß den Figuren 1, 2 und 3 mit vollständig in die Entriegelungsstellung überführten Schwenkhebel,
- Figur 5: die Verriegelungseinrichtung gemäß den Figuren 1, 2, 3 und 4, bei der eine Schwenkbewegung des Schwenkhebels aufgrund eines auf den Schwenkhebel einwirkenden, resultierenden Drehmoments >eine Bremskraft der Riegeleinrichtung ist,
- Figur 6: die Verriegelungseinrichtung gemäß den Figuren 1 bis 5 mit dem vollständig in die Entriegelungsstellung verschwenkten Schwenkhebel,
- Figur 7: eine zweite Ausführungsform einer Verriegelungseinrichtung, bei der die Riegeleinrichtung linearbeweglich am Grundkörper gelagert ist, in einer Schließstellung,
- Figur 8: die zweite Ausführungsform der Verriegelungseinrichtung gemäß der Figur 7 in einer ersten Öffnungsstellung, die auf eine benutzerseitige Betätigung zurückgeht,
- Figur 9: die zweite Ausführungsform der Verriegelungseinrichtung gemäß der Figur 7 in einer zweiten Öffnungsstellung, die auf eine überdruckbedingte Auslösung des Schwenkhebels zurückgeht, und
- Figur 10: die zweite Ausführungsform der Verriegelungseinrichtung gemäß der Figur 7 in einer vollständigen Öffnungsstellung nach überdruckbedingter Auslösung.

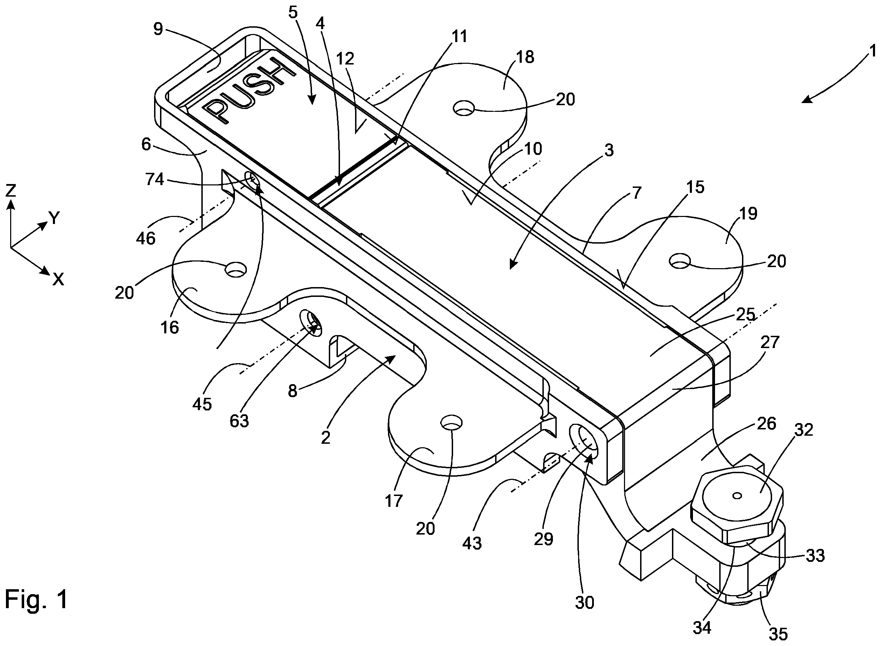

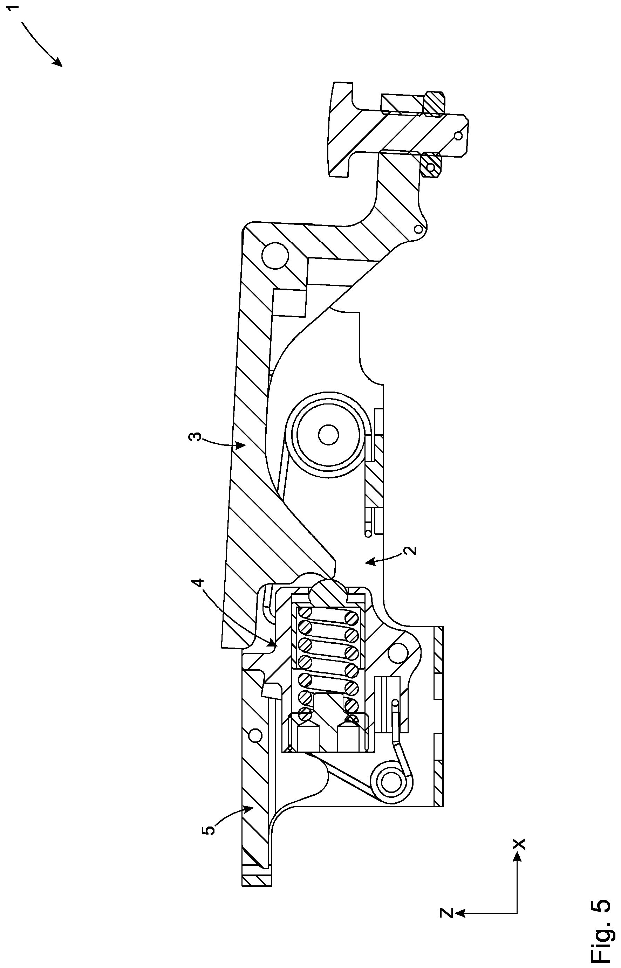

Die in den Figuren 1 bis 6 in unterschiedlichen Zuständen gezeigte Verriegelungseinrichtung 1 dient zur zeitweiligen, lösbaren Kopplung eines ersten Bauteils 21 mit einem zweiten Bauteil 22. Beispielhaft kann es sich bei dem ersten Bauteil 21 um eine Türe oder Wartungsklappe handeln, die schwenkbeweglich an einem zweiten Bauteil 22 wie beispielsweise einem Wandabschnitt in einem Gebäude oder einer Innenverkleidung in einem Flugzeug handeln kann. Für die Verriegelungseinrichtung werden insgesamt drei unterschiedliche Zustände unterschieden:
Der erste Zustand kann dadurch beschrieben werden, dass das erste Bauteil 21 mit dem zweiten Bauteil 22 unter Zuhilfenahme der Verriegelungseinrichtung gekoppelt ist, so dass beispielsweise eine Schwenkbewegung des ersten Bauteils 21 gegenüber dem zweiten Bauteil 22 unterbunden ist.

Der zweite Zustand kann dadurch beschrieben werden, dass die Verriegelungseinrichtung durch einen Benutzer, beispielsweise einem Monteur während einer Durchführung von Wartungsarbeiten, durch manuellen Eingriff in eine nicht näher dargestellte Vorzugsstellung gebracht wird, in der eine Schwenkbewegung des ersten Bauteils 21 gegenüber dem zweiten Bauteil 22 ermöglicht ist.

Bei einem dritten Zustand findet eine Schwenkbewegung des ersten Bauteils 21 gegenüber dem zweiten Bauteil 22 dadurch statt, dass die hierfür eingerichtete Verriegelungseinrichtung einen Riegelzustand zwischen dem ersten Bauteil 21 und dem zweiten Bauteil 22 freigibt.

Beispielhaft kann vorgesehen sein, dass eine solche Freigabe für den Fall erfolgt, das einen Druckunterschied zwischen einem ersten Raumbereich und einem zweiten Raumbereich, die durch das erste Bauteil 21 und das zweite Bauteil 22 voneinander getrennt werden, einen vorgebbaren Schwellwert überschreitet und damit eine in Schwenkrichtungen für das erste Bauteil 21 auftretende Druckkraft größer als eine maximale Riegelkraft der Verriegelungseinrichtung ist.

Gemäß der perspektivischen Darstellung der Figur 1 umfasst die Verriegelungseinrichtung 1 einen Grundkörper 2, an dem ein Schwenkhebel 3, eine Riegeleinrichtung 4 und eine Freigabeeinrichtung 5 angebracht sind.

Für die nachstehende Beschreibung der Verriegelungseinrichtung 1 wird auf das in den Figuren 1 bis 6 verwendete kartesischen Koordinatensystem mit einer entlang der längsten Erstreckung der Verriegelungseinrichtung 1 erstreckten X-Achse, eine hierzu 90 Grad abgewinkelten Y-Achse sowie einer sowohl zur X-Achse als auch zur Y-Achse um 90 Grad abgewinkelten Z-Achse Bezug genommen.

Beispielhaft ist vorgesehen, dass der Grundkörper 2 in einer nicht dargestellten, von der Y-Achse und der Zeitachse aufgespannten Querschnittsebene eine U-förmige Profilierung aufweist. Diese U-förmige Profilierung des Grundkörpers 2 wird von einer ersten Seitenwand 6, die einem ersten U-Schenkel bildet, einer zweiten Seitenwand 7, die einem zweiten U-Schenkel bildet, sowie einen Verbindungsabschnitt 8 gebildet, wobei der Verbindungsabschnitt 8 jeweils quer zur ersten Seitenwand 6 und zur zweiten Seitenwand 7 ausgerichtet ist. Ferner ist vorgesehen, dass die erste Seitenwand 6 und die zweite Seitenwand 7 jeweils parallel zueinander ausgerichtet sind.

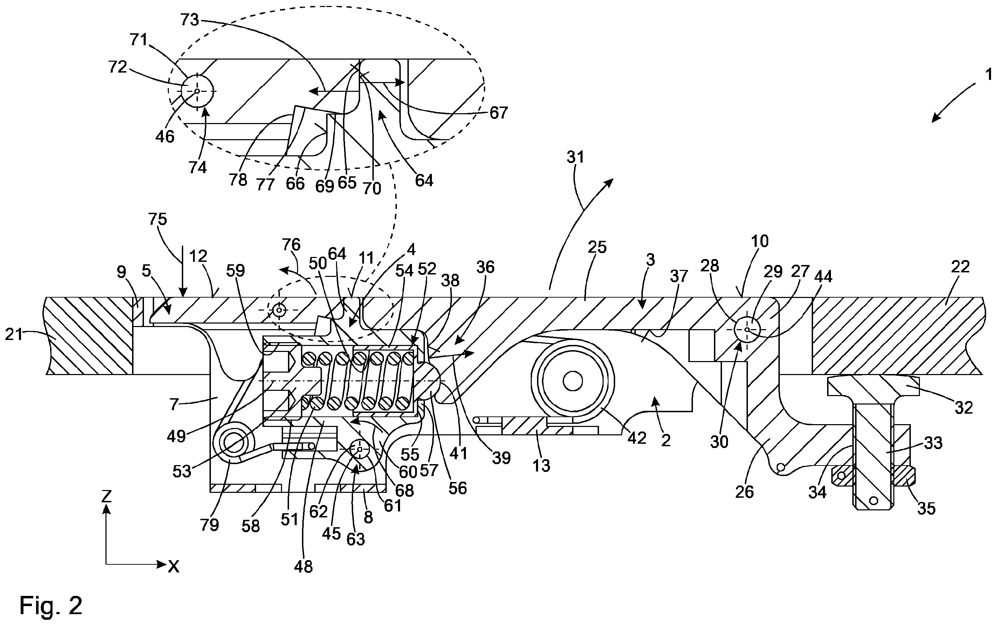

In einer Grundstellung der Verriegelungseinrichtung 1, wie sie in den Figuren 1 und 2 dargestellt ist, sind der Schwenkhebel 3, die Riegeleinrichtung 4 sowie die Freigabeeinrichtung 5 derart am Grundkörper 2 aufgenommen, dass eine Oberseite 10 des Schwenkhebels 3, eine Oberseite 11 der Riegeleinrichtung 4 sowie eine Oberseite 12 der Freigabeeinrichtung 5 in einer gemeinsamen Ebene angeordnet sind, die parallel zu einer nicht dargestellten Ebene angeordnet sind die die Y-Achse und die Zeitachse umfasst und die parallel zu einer U-förmigen Stirnfläche 15 des Grundkörpers 2 ausgerichtet ist.

Beispielhaft ist die Verriegelungseinrichtung 1 zur Anbringung an einem nicht dargestellten, plattenförmigen ersten Bauteil 21 ausgebildet, wobei das erste Bauteil 21 hierzu mit einer schlitzförmigen Ausnehmung versehen ist, die eine Geometrie der U-förmigen Stirnfläche 15 des Grundkörpers 2 entspricht. Dementsprechend kommen bei einer Montage der Verriegelungseinrichtung an dem nicht dargestellten ersten Bauteil 21 die jeweils in senkrechter Richtung von der ersten Seitenwand 6 und der zweiten Wand 7 abragenden Befestigungszungen 16, 17, 18 und 19 in flächige Anlage zu einer nicht dargestellten Rückseite des nicht dargestellten ersten Bauteils 21 in Anlage und ermöglichen mit den jeweils vorgesehenen Befestigungsbohrungen 20 eine Festlegung der Verriegelungseinrichtung 1 am nicht dargestellten ersten Bauteil 21.

Wie den Schnittdarstellungen der Figuren 2 bis 6 entnommen werden kann, umfasst der Schwenkhebel 3 einen mit seiner größten Erstreckung längs der X-Achse erstreckten ersten Schwenkhebelabschnitt 25 und einen einstückig mit dem ersten Schwenkhebelabschnitt 25 verbundenen, L-förmig profilierten zweiten Schwenkhebelabschnitt 26. Ein Verbindungsbereich 27 zwischen dem ersten Schwenkhebelabschnitt 25 und dem zweiten Schwenkhebelabschnitt 26 ist von einer rein exemplarisch als kreiszylindrische Bohrung ausgebildeten ersten Ausnehmung 28 durchsetzt, in der ein erster Lagerbolzen 29 aufgenommen ist, der sich zwischen der ersten Seitenwand 6 und der zweiten Seitenwand 7 erstreckt und der zusammen mit der ersten Ausnehmung 28 eine erste Lagereinrichtung 30 bildet. Diese eine erste Lagereinrichtung 30 ermöglicht eine Schwenkbewegung des Schwenkhebels 3 gegenüber dem Grundkörper 2 um eine erste Schwenkachse 44. Aufgrund der Anordnung und geometrischen Ausgestaltung des Schwenkhebels 3 und der Riegeleinrichtung 4 kann der Schwenkhebel 3 ausgehend von der Verriegelungsstellung, wie sie in den Figuren 1 und 2 gezeigt ist, ausschließlich eine Schwenkbewegung auf einer bogenförmigen Schwenkbahn 31 ausführen, die gemäß der Darstellung der Figuren 2 bis 6 im Uhrzeigersinn orientiert ist.

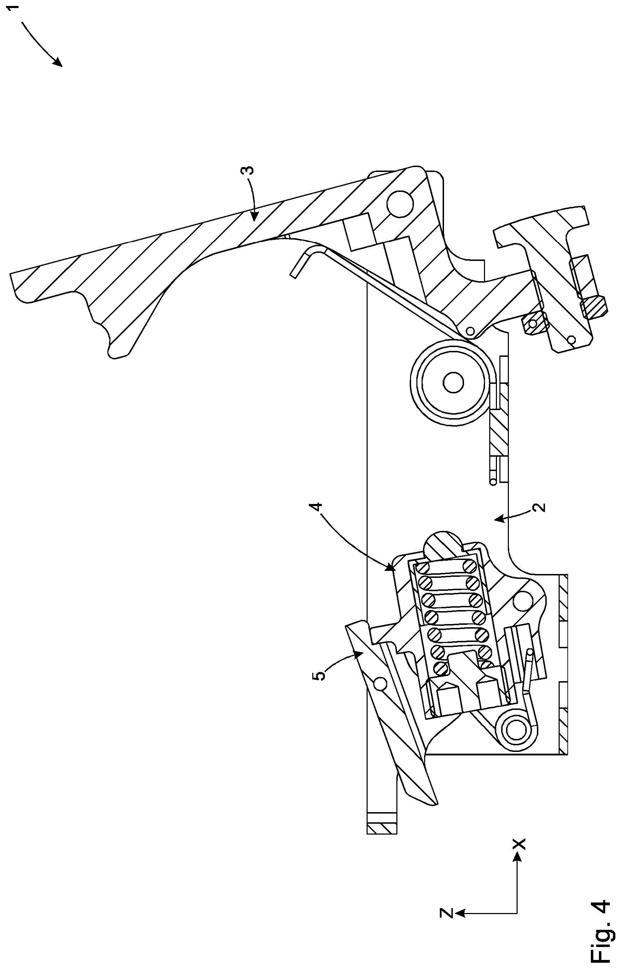

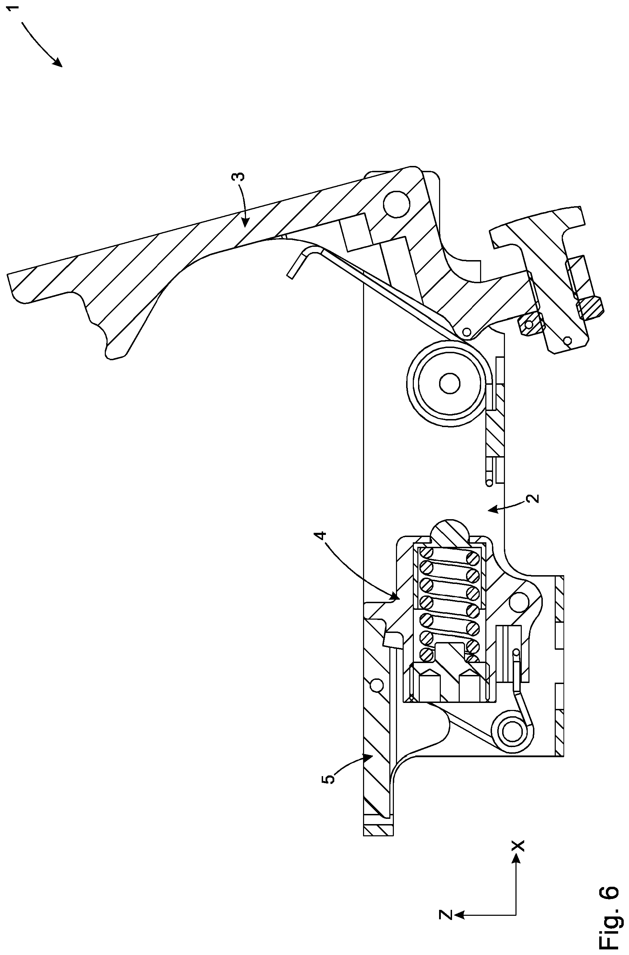

Im Zuge der Schwenkbewegung des Schwenkhebels 3 aus der Verriegelungsstellung gemäß der Figur 2 in eine Entriegelungsstellung, wie sie in den Figuren 4 und 6 gezeigt ist, verlässt ein endseitig am zweiten Schwenkhebelabschnitt 26 angeordneter Gegenhalter 32 eine in der Figur 2 erkennbare Kontaktposition mit dem schematischen angedeuteten zweiten Bauteil 22, so dass eine Kraftübertragung zwischen dem ersten Bauteil 21 und dem zweiten Bauteil 22 aufgehoben wird und somit eine Schwenkbewegung des ersten Bauteils 21 mit der daran angebrachten Verriegelungseinrichtung 1 gegenüber dem zweiten Bauteil 22 durchgeführt werden kann. Rein exemplarisch ist vorgesehen, dass der Gegenhalter 32 mit einem Schraubabschnitt 33 in eine Gewindebohrung 34 des zweiten Schwenkhebelabschnitt 26 eingeschraubt ist, womit eine Justierung des Gegenhalters 32 relativ zum zweiten Bauteil 22 vorgenommen werden kann. Zur Sicherung einer Position des Gegenhalters 32 am zweiten Schwenkhebelabschnitt 26 ist eine Kontermutter 35 vorgesehen, die auf den Schraubabschnitt 33 des Gegenhalters 32 aufgeschraubt werden kann und am zweiten Schwenkhebelabschnitt 26 abgestützt werden kann.

An einem dem zweiten Schwenkhebelabschnitt 26 abgewandten Endbereich des ersten Schwenkhebelabschnitts 25 ist am ersten Schwenkhebelabschnitt 25 ein Rastvorsprung 36 ausgebildet, dieser Rastvorsprung 36 erstreckt sich rein exemplarisch von einer parallel zur Oberseite 10 des Schwenkhebels 3 abgewandten Unterseite 37 des Schwenkhebels 3 längs der Z-Achse und weist eine Schwenkhebelstirnfläche 38 auf, deren Flächennormale 39 in einem spitzen Winkel zur X-Achse und quer zu einer ersten Schwenkachse 44 der ersten Lagereinrichtung 30 ausgebildet ist. Die Schwenkhebelstirnfläche 38 ist mit einer kugelabschnittsförmig ausgebildeten Vertiefung 41 versehen, die für eine Aufnahme eines Riegelteils 50 ausgebildet ist.

Dem Schwenkhebel 3 ist eine Federanordnung 42 zugeordnet, die zur Bereitstellung einer in Richtung der bogenförmigen Schwenkbahn 31 gerichteten Federkraft ausgebildet ist und die in nicht näher dargestellter Weise an der Unterseite 37 des Schwenkhebels 3 sowie an einem Verbindungssteg 13, der zwischen der ersten Seitenwand 6 und der zweiten Seitenwand 7 erstreckt ist, abgestützt ist.

Die Riegeleinrichtung 4 umfasst ein Riegelgehäuse 48, das rein exemplarisch in der Art einer Hülse mit einem quadratisch profilierten Querschnitt ausgebildet ist, wobei eine Hülsenachse 49 des Riegelgehäuses 48 in der Darstellung der Figur 2 parallel zur X-Achse ausgerichtet ist und die nicht dargestellte quadratische Profilierung in einer die Y-Achse und die Zeitachse umfassenden Querschnittsebene sichtbar wäre. In einer Ausnehmung 50 des Riegelgehäuses 48 sind eine rein exemplarisch als Wendelfeder ausgebildete Stützfeder 51, ein Riegelteil 52 und ein Stützteil 53 aufgenommen. Das Riegelteil 52 umfasst einen Hülsenabschnitt 54, mit kreisringförmigem Querschnitt, der längs der Hülsenachse 49 erstreckt ist und in dem die Stützfeder 51 abschnittsweise aufgenommen ist. An einer der Stützfeder 51 abgewandten Stirnseite 55 des Hülsenabschnitts 54 ist ein rein exemplarisch im Wesentlichen halbkugelförmig ausgebildeter Riegelbereich 56 angeordnet, der längs der X-Achse in Richtung des Schwenkhebels 3 abragt und der eine endseitig am Hülsenabschnitt 54 vorgesehene Stirnwand 57 durchsetzt. Der Riegelbereich 56 ist dabei zur Aufnahme in der Vertiefung 41 des Schwenkhebels 3 ausgebildet. An einem der Stirnwand 57 abgewandten Endbereich der Ausnehmung 50 im Riegelgehäuse 48 ist das Stützteil 53 mit einem Außengewinde 58 in ein Innengewinde 59 des Riegelgehäuses 48 eingeschraubt und ermöglicht damit eine axiale Abstützung der Stützfeder 51.

Das Riegelgehäuse 48 weist einen in der Z-Richtung abragenden Lagervorsprung 60 auf, der von einer als kreiszylindrische Bohrung ausgebildeten zweiten Ausnehmung 61 durchsetzt ist. In der zweiten Ausnehmung 61 ist ein zweiter Lagerbolzen 62 aufgenommen, der zwischen der ersten Seitenwand 6 und der zweiten Seitenwand 7 erstreckt ist und der zusammen mit der zweiten Ausnehmung 61 eine zweite Lagereinrichtung 63 für eine schwenkbewegliche Lagerung der Riegeleinrichtung 4 gegenüber dem Grundkörper 2 bildet, wobei eine Schwenkbewegung der Riegeleinrichtung 4 gegenüber dem Grundkörper 2 um eine zweite Schwenkachse 45 stattfindet. Während der Lagervorsprung 60 gemäß der Darstellung der Figur 2 an einer Unterseite des Riegelgehäuses 48 ausgebildet ist, ist an einer Oberseite des Riegelgehäuses 48 ein Riegelvorsprung 64 ausgebildet, der mit einer größten Erstreckung längs der Y-Achse erstreckt ist und der gemäß der Darstellung der Figur 2 eine treppenartige Profilierung mit einer ersten Stirnfläche 65 und einer zweiten Stirnfläche 66 aufweist. Rein exemplarisch ist vorgesehen, dass die erste Stirnfläche 65 und die zweite Stirnfläche 66 jeweils eben ausgebildet sind und parallel zueinander ausgerichtet sind.

Ferner sind die erste Stirnfläche 65 und die zweite Stirnfläche 66 sowohl hinsichtlich der X-Achse als auch hinsichtlich der Z-Achse versetzt zueinander angeordnet. Eine Flächennormale 67 der ersten Stirnfläche 65 ist rein exemplarisch parallel zur X-Achse ausgerichtet. Ferner ist vorgesehen, dass die Flächennormale 67 quer zu einem dritten Lagerbolzen 72 ausgerichtet ist, der sich für eine schwenkbewegliche Lagerung der Freigabeeinrichtung 5 zwischen der ersten Seitenwand 6 und der zweiten Seitenwand 7 erstreckt und der eine dritte Schwenkachse bestimmt, um die die Freigabeeinrichtung 5 relativ zum Grundkörper 2 verschwenkt werden kann. Bevorzugt ist vorgesehen, dass die Flächennormale 67 der ersten Stirnfläche 65 den dritten Lagerbolzen 72, insbesondere die vom dritten Lagerbolzen 72 bestimmte dritte Schwenkachse schneidet. Beispielhaft ist vorgesehen, dass die Freigabeeinrichtung 5 im Wesentlichen als Planparallelplatte ausgebildet ist und von einer dritten Ausnehmung 71 durchsetzt ist, die zur Aufnahme des dritten Lagerbolzens 72 dient. Ferner ist vorgesehen, dass die Freigabeeinrichtung 5 eine dritte Stirnfläche 70 aufweist, deren Flächennormale 73 den dritten Lagerbolzen 72 schneidet. Der dritte Lagerbolzen 72 bildet zusammen mit der dritten Ausnehmung 71 die dritte Lagereinrichtung 74.

Der Riegeleinrichtung 4 und der Freigabeeinrichtung 5 ist eine Federeinrichtung 79 zugeordnet, die eine Federkraft auf die Riegeleinrichtung 4 einleitet, die zu einem Drehmoment für die Riegeleinrichtung 4 um die zweite Lagereinrichtung 63 führt, das gemäß der Darstellung der Figuren 2 bis 6 gegen den Uhrzeigersinn ausgerichtet ist. Ferner führt die Federkraft der Federeinrichtung 79, die auf die Freigabeeinrichtung 5 einwirkt, zu einem Drehmoment um die dritte Lagereinrichtung 74, wobei dieses Drehmoment im Uhrzeigersinn ausgerichtet ist. Durch diese beiden entgegengesetzten Drehmomente werden die erste Stirnfläche 65 des Riegelvorsprungs 64 und die dritte Stirnfläche 70 der Freigabeeinrichtung 5 gegeneinander gepresst. Dabei ist die Kraftwirkung zwischen der ersten Stirnfläche 65 und der dritten Stirnfläche 70 im Wesentlichen parallel zur X-Achse ausgerichtet, so dass es zu keinem unerwünschten Drehmoment auf die Freigabeeinrichtung 5 kommt. Hinzu kommt, dass die Freigabeeinrichtung 5 mit einer an die dritte Stirnfläche 70 angrenzenden, vorzugsweise in spitzem Winkel zur X-Achse ausgerichteten Unterseite 77 auf einer parallel zur X-Achse ausgerichteten, zwischen der ersten Stirnfläche 65 und der zweiten Stirnfläche 66 angeordneten Horizontalfläche 69 aufliegt und dadurch ebenfalls eine Abstützung des auf die Freigabeeinrichtung 5 einwirkenden Drehmoments der Federeinrichtung 79 gewährleistet ist.

Ausgehend von der Darstellung der Figur 2, in der die Verriegelungseinrichtung 1 eine Verriegelungsstellung einnimmt, bei der eine Kopplung des ersten Bauteils 21 mit dem zweiten Bauteil 22 mit Hilfe der Verriegelungseinrichtung 1 gewährleistet ist, was dem vorstehend beschriebenen ersten Zustand entspricht, kann eine Entkopplung des ersten Bauteils 21 vom zweiten Bauteil 22 auf zwei unterschiedliche Arten erfolgen.

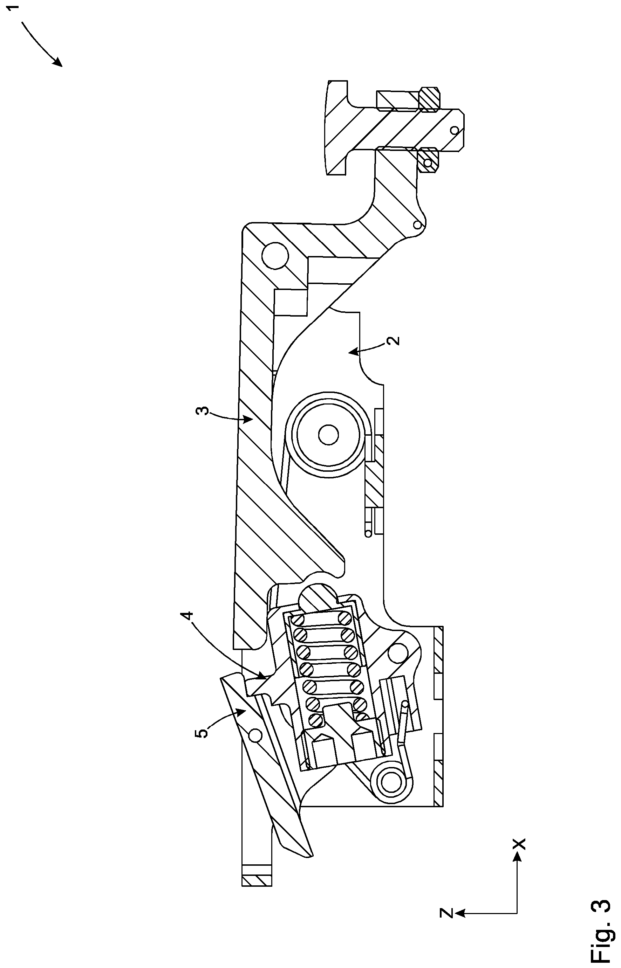

Bei einer ersten Art der Entkopplung findet eine manuelle Einflussnahme eines nicht dargestellten Bedieners statt. Hierbei übt der Bediener eine in der Figur 2 schematisch eingezeichnete Bedienkraft 75 in derartiger Weise auf die Freigabeeinrichtung 5 aus, dass die Freigabeeinrichtung 5 aus der Blockierstellung gemäß der Figur 2 längs einer konzentrisch zum dritten Lagerbolzen 72 ausgerichteten, bogenförmigen Schwenkbahn 76 in eine Freigabestellung überführt wird, wie sie in der Figur 3 gezeigt ist. Durch diese Schwenkbewegung der Freigabeeinrichtung 5 wird eine Schwenkbewegung der Riegeleinrichtung 4 um den zweiten Lagerbolzen 62 ermöglicht, wobei diese Schwenkbewegung gleichsinnig wie die Schwenkbewegung der Freigabeeinrichtung 5 verläuft und durch die Federeinrichtung 79 hervorgerufen wird. Die Schwenkbewegung der Riegeleinrichtung 4 endet, sobald die erste Stirnfläche 65 der Riegeleinrichtung 4 in Anlage zu einer vierten Stirnfläche 78 der Freigabeeinrichtung 5 kommt, die parallel versetzt zur dritten Stirnfläche 70 an der Freigabeeinrichtung 5 ausgebildet ist. Aufgrund der Schwenkbewegung der Riegeleinrichtung 4 wird eine formschlüssige Wirkverbindung zwischen dem Riegelvorsprung 64 und dem Schwenkhebel 3 aufgehoben, so dass der Schwenkhebel 2 aufgrund der inneren Vorspannung der Federanordnung 42 aus der Verriegelungsstellung gemäß der Figur 2 in die Entriegelungsstellung überführt wird, wie sie in der Figur 4 gezeigt ist.

Bei einer gewünschten Kopplung des ersten Bauteils 21 mit dem zweiten Bauteil 22 unter Verwendung der Verriegelungseinrichtung 1 ist hingegen vorgesehen, dass ein nicht dargestellter Bediener eine Krafteinleitung auf den Schwenkhebel 3 dahingehend vornimmt, dass dieser entgegen der inneren Vorspannung der Federanordnung 42 aus der Entriegelungsstellung gemäß der Figur 4 und entgegen der Pfeilrichtung für die bogenförmige Schwenkbahn 31 in Richtung der Verriegelungsstellung bewegt wird. Hierbei kommt die Unterseite 37 des Schwenkhebels 3 in Anlage an das Riegelgehäuse 48, so dass bei ausreichender Krafteinleitung auf den Schwenkhebel 3 zusätzlich auch eine Schwenkbewegung der Riegeleinrichtung 4 um die zweite Lagereinrichtung 63 vollzogen wird. Hierbei findet eine Vergrößerung der inneren Vorspannung für die Federeinrichtung 79 statt. Ferner wird hierdurch eine Bewegung der Freigabeeinrichtung 5 aus der Freigabestellung gemäß den Figuren 3 und 4 in die Blockierstellung gemäß der Figur 2 ermöglicht, so dass am Ende dieses Kopplungsvorgangs wieder die in der Figur 2 dargestellte Ausgangssituation erreicht ist.

Liegen hingegen zwischen dem ersten Bauteil 21 und dem zweiten Bauteil 22 Krafteinwirkungen auf, die in einer Krafteinleitung in negativer Richtung längs der Z-Achse auf den Gegenhalter 32 führen, so wird hierdurch ein im Uhrzeigersinn wirkendes Drehmoment um die erste Lagereinrichtung 30 hervorgerufen. Diesem Drehmoment steht ein Bremsmoment entgegen, das durch die kraftschlüssige und formschlüssige Wirkverbindung zwischen dem Riegelvorsprung 64 und der Vertiefung 41 im Schwenkhebel 3 sowie der inneren Vorspannung der Stützfeder 51 hervorgerufen wird.

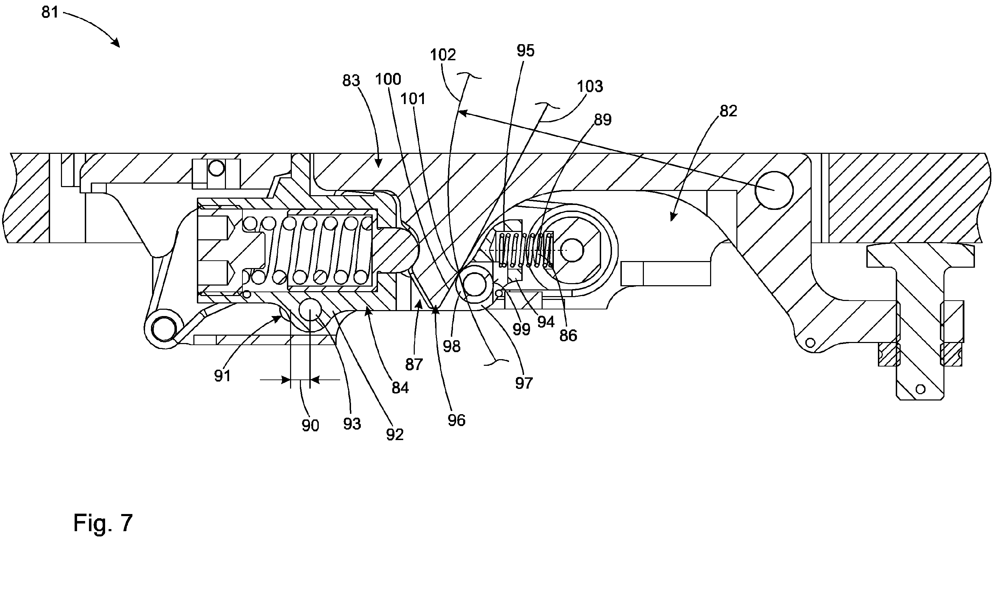

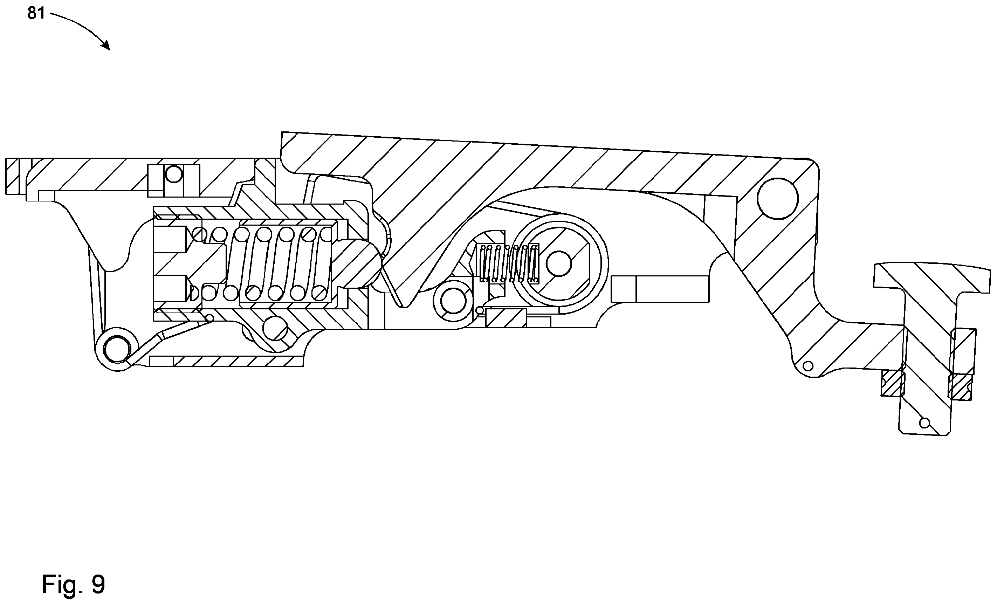

Bei der nachstehenden Beschreibung der in den Figuren 7 bis 10 dargestellten zweiten Ausführungsform einer Verriegelungseinrichtung 81 werden Komponenten, die identisch oder zumindest funktionsgleich mit Komponenten der ersten Ausführungsform der Verriegelungseinrichtung 1 sind, mit den gleichen Bezugszeichen versehen und nicht erneut beschrieben.

Die Verriegelungseinrichtung 81 unterscheidet sich von der Verriegelungseinrichtung 1 dadurch, dass die Riegeleinrichtung 84 linearbeweglich am Grundkörper 82 gelagert ist und von einem Federmittel 86, das an einem der Riegeleinrichtung 84 zugehörigen Ausleger 87 sowie an einem Stützzapfen 88 abgestützt ist, mit einer Federkraft beaufschlagt wird. Hierzu ist vorgesehen, dass eine Mittelachse 89 des Federmittels 86 parallel zu einer Bewegungsachse 90 der Riegeleinrichtung 84 ausgerichtet ist und in der Ruhestellung der Verriegelungseinrichtung 81, wie sie in der Figur 7 dargestellt ist, eine komprimierte Stellung mit innerer Federspannung einnimmt. Die Bewegungsachse 90 der Riegeleinrichtung 84 wird von einem Langloch 91 im Grundkörper 82 und einem am Riegelgehäuse 92 aufgenommenen und in das Langloch 91 eingreifenden Führungsbolzen 93 bestimmen. Hierbei dient das Langloch 91 als Kulissenführung für den Führungsbolzen 93. Gegebenenfalls kann vorgesehen sein, dass das Riegelgehäuse 92 mit einem weiteren, nicht dargestellten Führungsbolzen in ein weiteres, ebenfalls nicht dargestelltes Langloch im Grundkörper 82 eingreift, um eine eindeutige Beschränkung der Beweglichkeit für das Riegelgehäuse 92 auf einen einzigen linearen Freiheitsgrad der Bewegung zu gewährleisten.

Bevorzugt ist vorgesehen, dass der Ausleger 87, der sich ausgehend vom Riegelgehäuse 92 in Richtung der ersten Lagereinrichtung 30 erstreckt und der an einem Endbereich 94 mit einer Bohrung 95 zur Aufnahme des Federmittels 86 ausgerüstet ist, in der Ruhestellung gemäß der Figur 7 den Rastvorsprung 96 des Schwenkhebels 83 rahmenförmig umgibt und damit einen Aufnahmebereich 97 bestimmt. Im Aufnahmebereich 97 ist ein quer zur Darstellungsebene der Figur 7 ausgerichteter und parallel zur ersten Lagereinrichtung 30 angeordneter Steuerbolzen 98 vorgesehen, der mit dem Ausleger 87 verbunden ist und der eine kreiszylindrische Außenoberfläche 99 aufweist, die als erste Steuerfläche bezeichnet werden kann.

Am Rastvorsprung 96 ist eine gegenüberliegend zum Steuerbolzen 98 angeordnete, dem Riegelteil 52 abgewandte Oberfläche 100 ausgebildet, die auch als zweite Steuerfläche bezeichnet wird und die für einen Berührkontakt mit der Außenoberfläche 99 des Steuerbolzens 98 vorgesehen ist.

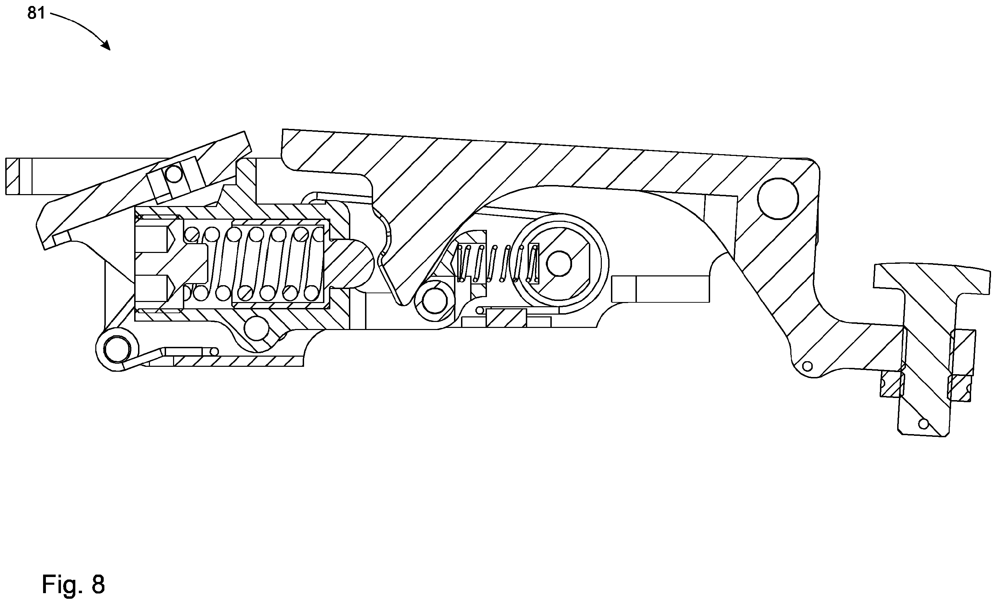

Die Aufgabe des Steuerbolzens 98 und der Oberfläche 100 besteht darin, eine definierte Verlagerung der Riegeleinrichtung 84 bei einer Durchführung einer Schwenkbewegung des Schwenkhebels 83 aus der Entriegelungsstellung gemäß der Figur 8 in die Verriegelungsstellung gemäß der Figur 7 zu ermöglichen, ohne dass ein Benutzer hierzu auf die Riegeleinrichtung 84 zugreifen muss. Vielmehr wird durch die Wechselwirkung der Oberfläche 100 mit der Außenoberfläche 99 eine Verdrängungsbewegung für den Steuerbolzen 98 vom Schwenkhebel 83 bewirkt, so dass dieser unter Kompression des Federmittels 86 linear in die Riegelstellung verlagert wird und dabei die Verriegelung des Schwenkhebels 83 gewährleistet. Im Zuge dieser linearen Verlagerung der Riegeleinrichtung 84 wird auch die Freigabeeinrichtung 5 durch Einwirkung der Federeinrichtung 79 in die Blockierstellung überführt.

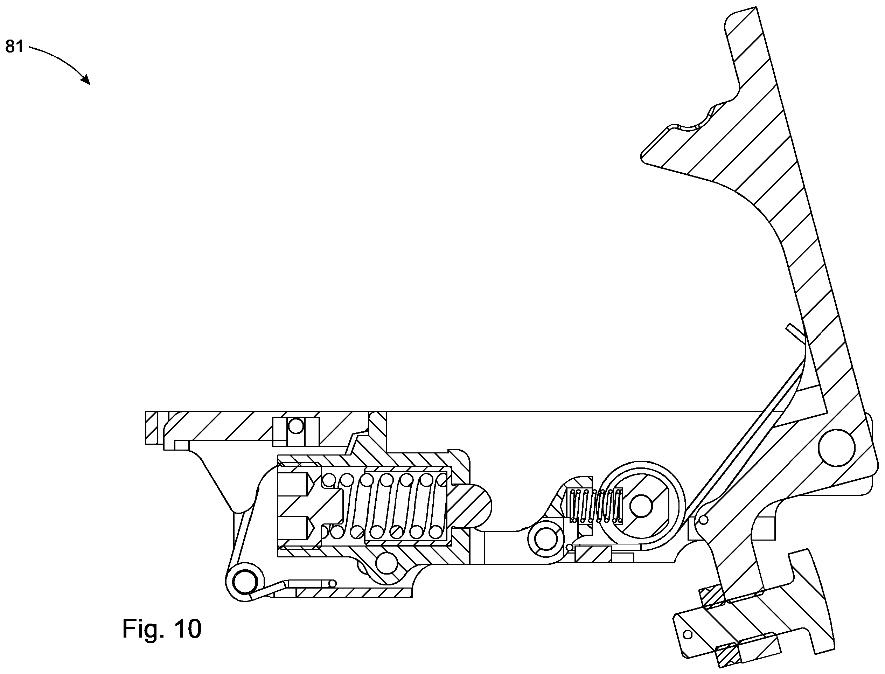

Im Hinblick auf eine überdruckbedingte Auslösung der Verriegelungseinrichtung 81 ergeben sich keine signifikanten Unterschiede gegenüber der Verriegelungseinrichtung 1. Wie bei der Verriegelungseinrichtung 1 verbleibt die Riegeleinrichtung 84 bei Überschreitung eines durch Wechselwirkung zwischen der Riegeleinrichtung 84 und dem Schwenkhebel 83 definierten Auslösemoments in ihrer Riegelstellung. Lediglich das Riegelteil 52 wird aufgrund der Einwirkung des überdruckbedingten Drehmoments auf den Schwenkhebel 83 kurzzeitig linear verlagert, so dass die formschlüssige Verbindung zwischen dem Riegelteil 52 und dem Schwenkhebel 83 aufgehoben wird. Sobald dies der Fall ist, kann der Schwenkhebel 83 ohne weitere Bewegungswiderstände in die Öffnungsstellung gemäß der Figur 10 verschwenkt werden und gibt damit das zu verriegelnde Bauteil frei.

## Patentansprüche

1. Verriegelungseinrichtung (1; 81) zur zeitweiligen, lösbaren Kopplung eines ersten Bauteils (21) mit einem zweiten Bauteil (22), mit einem Grundkörper (2; 82), der zur Festlegung an dem ersten Bauteil (21) ausgebildet ist und der eine erste Lagereinrichtung (30), eine zweite Lagereinrichtung (63) und eine dritte Lagereinrichtung (74) umfasst, mit einem an der ersten Lagereinrichtung (30) schwenkbeweglich um eine erste Schwenkachse (44) zwischen einer Verriegelungsstellung für das zweite Bauteil (22) und einer Entriegelungsstellung für das zweite Bauteil (22) verschwenkbaren Schwenkhebel (3; 83), mit einer an der zweiten Lagereinrichtung (63) beweglich gelagerten Riegeleinrichtung (4; 84), die ein federelastisch abgestütztes Riegelteil (52) aufweist, das in einer Riegelstellung der Riegeleinrichtung (4; 84) zur Anlage am Schwenkhebel (3; 83) ausgebildet ist, um in der Verriegelungsstellung des Schwenkhebels (3; 83) eine vorgebbare Bremskraft auf den Schwenkhebel (3; 83) zu übertragen, mit einer an der dritten Lagereinrichtung (74) beweglich gelagerten Freigabeeinrichtung (5), die in einer Blockierstellung für eine Blockierung der Riegeleinrichtung (4; 84) in der Riegelstellung und in einer Freigabestellung für eine Freigabe der Riegeleinrichtung (4; 84) aus der Riegelstellung ausgebildet ist, **dadurch gekennzeichnet, dass** die Riegeleinrichtung (4) ein Riegelgehäuse (48) umfasst, das beweglich, vorzugsweise linearbeweglich, insbesondere schwenkbeweglich um eine zweite Schwenkachse (45), an der, insbesondere als Lagerzapfen ausgebildeten, zweiten Lagereinrichtung (63) aufgenommen ist und dass im Riegelgehäuse (48) eine quer zur zweiten Schwenkachse (45) ausgerichtete und beabstandet zur zweiten Schwenkachse (45) angeordnete Ausnehmung (50) zur Aufnahme einer Federeinrichtung (51) und des Riegelteils (52) ausgebildet ist, wobei das Riegelteil (52) mit einem Riegelbereich (56) über eine Außenoberfläche (57) des Riegelgehäuses (48) abragt.

2. Verriegelungseinrichtung (1; 81) nach Anspruch 1, **dadurch gekennzeichnet, dass** der Riegelbereich (56) in eine korrespondierend ausgebildete Ausnehmung (41) im Schwenkhebel (3; 83) eingreift, die in einer Schwenkhebelstirnfläche (38) des Schwenkhebels (3; 83) ausgebildet ist, wobei eine Flächennormale (39) der Schwenkhebelstirnfläche (38; 83) quer zur ersten Schwenkachse (44) ausgerichtet ist.

3. Verriegelungseinrichtung (1; 83) nach Anspruch 1 oder 2, **dadurch gekennzeichnet, dass** die Freigabeeinrichtung (5) schwenkbeweglich um eine dritte Schwenkachse (46) an der dritten Lagereinrichtung (74) gelagert ist und eine dritte Stirnfläche (70) aufweist, deren Flächennormale (73) quer zur dritten Schwenkachse (46) ausgerichtet ist, wobei die dritte Stirnfläche (70) in der Blockierstellung für eine Anlage an einem Vorsprung (64) der Riegeleinrichtung (4) ausgebildet ist, der eine parallel zur dritten Schwenkachse (46) ausgerichtete größte Erstreckung aufweist, um eine Bewegung, vorzugsweise eine Linearbewegung, insbesondere eine Schwenkbewegung, der Riegeleinrichtung (4; 84) aus der Riegelstellung zu verhindern.

4. Verriegelungseinrichtung (1; 81) nach Anspruch 3, **dadurch gekennzeichnet, dass** eine Projektion der dritten Stirnfläche (70) auf eine Projektionsebene, die quer zu einer Flächennormalen (73) der dritten Stirnfläche (70) ausgerichtet ist, die dritte Schwenkachse (46) schneidet, insbesondere dass die Flächennormale (73) der dritten Stirnfläche (70) die dritte Schwenkachse (46) schneidet.

5. Verriegelungseinrichtung (1) nach Anspruch 3 oder 4, **dadurch gekennzeichnet, dass** das Riegelgehäuse (48) derart zwischen der zweiten Schwenkachse (45) und der dritten Schwenkachse (46) angeordnet ist, dass eine Schwenkbewegung der Riegeleinrichtung (4) zwischen der Riegelstellung und einer Freigabestellung und eine Schwenkbewegung der Freigabeeinrichtung (5) zwischen der Blockierstellung und der Freigabestellung gleichsinnig in einer ersten Schwenkrichtung (68, 76) erfolgen und dass der Schwenkhebel (3) derart angeordnet ist, dass eine Schwenkbewegung des Schwenkhebels (3) aus der Verriegelungsstellung in die Entriegelungsstellung in einer der ersten Schwenkrichtung (68, 76) entgegengesetzten zweiten Schwenkrichtung (31) erfolgt.

6. Verriegelungseinrichtung (1) nach Anspruch 3, 4 oder 5, **dadurch gekennzeichnet, dass** die erste Schwenkachse (44), die zweite Schwenkachse (45) und die dritte Schwenkachse (46) parallel zueinander ausgerichtet sind.

7. Verriegelungseinrichtung (1) nach einem der vorhergehenden Ansprüche, **dadurch gekennzeichnet, dass** der Freigabeeinrichtung (5) und der Riegeleinrichtung (4) eine Federeinrichtung (79) zugeordnet ist, die für eine Einleitung von gegenläufig ausgerichteten Drehmomenten auf die Freigabeeinrichtung (5) und die Riegeleinrichtung (4) ausgebildet ist und/oder dass dem Schwenkhebel (3) eine Federanordnung (42) zugeordnet ist, die für eine Bereitstellung eines in die Freigabestellung gerichteten Drehmoments auf den Schwenkhebel (3) ausgebildet ist.

8. Verriegelungseinrichtung (1; 81) nach einem der vorhergehenden Ansprüche, **dadurch gekennzeichnet, dass** der Schwenkhebel (3; 83) in der Verriegelungsstellung mit einem ersten Endbereich (25) auf einem Gehäuseabschnitt des Riegelgehäuses (48; 92) aufliegt und/oder dass der Riegelvorsprung (64) der Riegeleinrichtung (4) in der Freigabestellung der Freigabeeinrichtung (5) an einer benachbart zur dritten Stirnfläche (70) der Freigabeeinrichtung (5) angeordneten Stützfläche (78) anliegt.

9. Verriegelungseinrichtung (1; 81) nach einem der vorhergehenden Ansprüche, **dadurch gekennzeichnet, dass** der Schwenkhebel (3; 83) bei Überwindung der vom federelastisch abgestützten Riegelteil (52) ausgeübten Bremskraft ohne eine Bewegung der Riegeleinrichtung (4; 84) aus der Riegelstellung und ohne eine Bewegung der Freigabeeinrichtung (5) aus der Blockierstellung aus der Verriegelungsstellung in die Entriegelungsstellung verlagerbar ist.

10. Verriegelungseinrichtung (81) nach Anspruch 1, 2, 3 oder 4, **dadurch gekennzeichnet, dass** das Riegelgehäuse (92) linearbeweglich am Grundkörper (82) gelagert ist und dass ein am Grundkörper (82) abgestütztes Federmittel (86) für eine Bereitstellung einer in Richtung der Freigabeeinrichtung (5) ausgerichteten Federkraft ausgebildet ist.

11. Verriegelungseinrichtung (81) nach Anspruch 10, **dadurch gekennzeichnet, dass** am Riegelgehäuse (92) eine erste Steuerfläche (99) ausgebildet ist und dass am Schwenkhebel (83) eine zweite Steuerfläche (100) ausgebildet ist, die für eine Einleitung einer Kompressionsbewegung auf das Federmittel (86) bei der Überführung des Schwenkhebels (83) aus der Entriegelungsstellung in die Verriegelungsstellung ausgebildet sind.

12. Verriegelungseinrichtung (81) nach Anspruch 10 oder 11, **dadurch gekennzeichnet, dass** die erste Steuerfläche (99) kreiszylindrisch ausgebildet ist und eine Mittelachse der ersten Steuerfläche (99) parallel zur Mittelachse der ersten Lagereinrichtung (30) ausgerichtet ist und dass die zweite Steuerfläche (100) als Ebene oder als Abschnitt einer zylindrischen Mantelfläche ausgebildet ist.

## Claims

1. A latch (1; 81) for temporarily and releasably coupling a first component (21) to a second component (22), comprising a base body (2; 82) that is configured to be secured to the first component (21) and that comprises a first bearing (30), a second bearing (63), and a third bearing (74), further comprising a pivot lever (3; 83) pivotably mounted on the first bearing (30) about a first pivot axis (44) between a locking position for the second component (22) and an unlocking position for the second component (22), (3; 83) and a locking device (4; 84) movably mounted on the second bearing (63), which comprises a spring-loaded locking member (52) that is configured, in a locking position of the locking device (4; 84) to bear against the pivot lever (3; 83) in order to transmit a predeterminable braking force to the pivot lever (3; 83) in the locking position of the pivot lever (3; 83), comprising a release mechanism (5) movably mounted on the third bearing (74), which is configured in a locking position to lock the locking device (4; 84) in the locked position and in a release position to release the locking device (4; 84) from the locked position, **characterized in that** the locking device (4) comprises a latch housing (48) that is mounted movably, preferably linearly, and in particular pivotably about a second pivot axis (45), on the second bearing (63), which is formed in particular as a bearing journal, and that a recess (50) is formed in the latch housing (48) and spaced apart from the second pivot axis (45) for receiving a spring (51) and the latch member (52), wherein the latch member (52) projects with a latch region (56) beyond an outer surface (57) of the latch housing (48).

2. Latch (1; 81) according to claim 1, **characterized in that** the locking region (56) engages in a correspondingly formed recess (41) in the pivot lever (3; 83), which is formed in a pivot lever end face (38) of the pivot lever (3; 83), wherein a surface normal (39) of the pivot lever end face (38; 83) is oriented transversely to the first swivel axis (44).

3. Latch (1; 83) according to claim 1 or 2, **characterized in that** the release mechanism (5) is pivotally mounted on the third bearing (74) about a third pivot axis (46) and has a third end face (70) whose surface normal (73) is oriented transversely to the third pivot axis (46), wherein the third end face (70) is configured in the locking position to engage a projection (64) of the locking device (4), which has a maximum extent oriented parallel to the third pivot axis (46), in order to prevent movement, preferably linear movement, and in particular a pivoting movement, of the locking device (4; 84) out of the locked position.

4. Latch (1; 81) according to claim 3, **characterized in that** a projection of the third end face (70) onto a projection plane, which is oriented transversely to a surface normal (73) of the third end face (70), intersects the third pivot axis (46), in particular that the surface normal (73) of the third end face (70) intersects the third pivot axis (46).

5. Latch (1) according to claim 3 or 4, **characterized in that** the locking housing (48) is arranged between the second pivot axis (45) and the third pivot axis (46) such that a pivoting movement of the locking device (4) between the locking position and a release position and a pivoting movement of the release mechanism (5) between the locking position and the release position occur in the same direction in a first pivoting direction (68, 76), and **in that** the pivot lever (3) is arranged such that a pivoting movement of the pivot lever (3) from the locking position to the unlocking position occurs in a second pivoting direction (31) opposite to the first pivoting direction (68, 76).

6. Latch (1) according to claim 3, 4, or 5, **characterized in that** the first pivot axis (44), the second pivot axis (45), and the third pivot axis (46) are aligned parallel to one another.

7. Latch (1) according to any one of the preceding claims, **characterized in that** a spring assembly (79) is associated with the release mechanism (5) and the locking device (4), which spring assembly is configured to apply counter-rotating torques to the release mechanism (5) and the locking device (4) and/or that a spring assembly (42) is associated with the pivot lever (3), which is designed to provide a torque directed toward the release position on the pivot lever (3).

8. Latch (1; 81) according to one of the preceding claims, **characterized in that** the pivot lever (3; 83) rests in the locking position with a first end region (25) on a housing section of the latch housing (48; 92) and/or that the latch projection (64) of the latch device (4) rests against a support surface (78) arranged adjacent to the third end face (70) of the release mechanism (5) in the release position of the release mechanism (5).

9. Latch (1; 81) according to one of the preceding claims, **characterized in that** the pivot lever (3; 83), upon overcoming the braking force exerted by the spring-supported latch portion (52), can be moved from the locking position to the unlocking position without any movement of the latch device (4; 84) from the locking position and without moving the release mechanism (5) from the blocking position, can be moved from the locking position to the unlocking position.

10. Latch (81) according to claim 1, 2, 3, or 4, **characterized in that** the latch housing (92) is mounted on the base body (82) so as to be linearly movable, and that a spring means (86) supported on the base body (82) is configured to provide a spring force directed toward the release mechanism (5).

11. Latch (81) according to claim 10, **characterized in that** a first control surface (99) is formed on the bolt housing (92) and that a second control surface (100) formed on the pivot lever (83), which are configured to induce a compressive movement on the spring means (86) when the pivot lever (83) is moved from the unlocked position to the locked position.

12. Latch (81) according to claim 10 or 11, **characterized in that** the first control surface (99) is circularly cylindrical and a central axis of the first control surface (99) is aligned parallel to the central axis of the first bearing (30), and **in that** the second control surface (100) is formed as a plane or as a section of a cylindrical surface.

## Revendications

1. Dispositif de verrouillage (1 ; 81) pour le couplage temporaire amovible d'un premier composant (21) à un deuxième composant (22), avec un corps de base (2 ; 82), qui est réalisé pour être fixé sur le premier composant (21) et qui comprend un premier dispositif de palier (30), un deuxième dispositif de palier (63) et un troisième dispositif de palier (74), avec un levier pivotant (3 ; 83) mobile par pivotement sur le premier dispositif de palier (30) pouvant pivoter autour d'un premier axe de pivotement (44) entre une position de verrouillage pour le deuxième composant (22) et une position de déverrouillage pour le deuxième composant (22), avec un dispositif de verrou (4 ; 84) monté de manière mobile sur le deuxième dispositif de palier (63), qui présente une partie de verrou (52) soutenue par ressort, qui est réalisée dans une position de verrou du dispositif de verrou (4 ; 84) pour venir en appui sur le levier pivotant (3 ; 83), pour appliquer une force de freinage prédéterminable sur le levier pivotant (3 ; 83) dans la position de verrouillage du levier pivotant (3 ; 83), avec un dispositif de libération (5) monté de manière mobile sur le troisième dispositif de palier (74), qui est réalisé dans une position de blocage pour un blocage du dispositif de verrou (4 ; 84) dans la position de verrouillage et dans une position de libération pour une libération du dispositif de verrou (4 ; 84) hors de la position de verrou, **caractérisé en ce que** le dispositif de verrou (4) comprend un boîtier de verrou (48) qui est reçu de manière mobile, de préférence de manière mobile linéairement, en particulier de manière mobile par pivotement autour d'un deuxième axe de pivotement (45), sur le deuxième dispositif de palier (63) réalisé en particulier comme un pivot de palier et qu'un évidement (50) orienté transversalement par rapport au deuxième axe de pivotement (45) et disposé à distance du deuxième axe de pivotement (45) est réalisé dans le boîtier de verrou (48) pour recevoir un dispositif à ressort (51) et la partie de verrou (52), dans lequel la partie de verrou (52) dépasse par une zone de verrou (56) d'une surface extérieure (57) du boîtier de verrou (48).

2. Dispositif de verrouillage (1 ; 81) selon la revendication 1, **caractérisé en ce que** la zone de verrou (56) vient en prise avec un évidement (41) réalisé en correspondance dans le levier pivotant (3 ; 83), qui est réalisé dans une surface frontale (38) du levier pivotant (3 ; 83), dans lequel une normale à surface (39) de la surface frontale de levier pivotant (38 ; 83) est orientée perpendiculairement au premier axe de pivotement (44).

3. Dispositif de verrouillage (1 ; 83) selon la revendication 1 ou 2,**caractérisé en ce que** le dispositif de libération (5) est monté de manière mobile par pivotement autour d'un troisième axe de pivotement (46) sur le troisième dispositif de palier (74) et présente une troisième surface frontale (70) dont la normale de surface (73) est orientée transversalement par rapport au troisième axe de pivotement (46), dans lequel la troisième surface frontale (70) est réalisée dans la position de blocage pour un appui sur une saillie (64) du dispositif de verrouillage (4) qui présente une plus grande extension orientée parallèlement au troisième axe de pivotement (46) pour empêcher un mouvement, de préférence un mouvement linéaire, en particulier un mouvement de pivotement, du dispositif de verrou (4 ; 84) hors de la position de verrou.

4. Dispositif de verrouillage (1 ; 81) selon la revendication 3, **caractérisé en ce qu'**une projection de la troisième surface frontale (70) sur un plan de projection, qui est orienté transversalement à une normale de surface (73) de la troisième surface frontale (70), coupe le troisième axe de pivotement (46), en particulier que la normale de surface (73) de la troisième surface frontale (70) coupe le troisième axe de pivotement (46).

5. Dispositif de verrouillage (1) selon la revendication 3 ou 4, **caractérisé en ce que** le boîtier de verrou (48) est disposé de telle manière entre le deuxième axe de pivotement (45) et le troisième axe de pivotement (46) qu'un mouvement de pivotement du dispositif de verrou (4) entre la position de verrou et une position de libération et un mouvement de pivotement du dispositif de libération (5) entre la position de blocage et la position de libération s'effectuent dans le même sens dans un premier sens de pivotement (68, 76) et que le levier pivotant (3) est disposé de telle manière qu'un mouvement de pivotement du levier pivotant (3) s'effectue de la position de verrouillage dans la position de déverrouillage dans une deuxième direction de pivotement (31) opposée à la première direction de pivotement (68, 76).

6. Dispositif de verrouillage (1) selon la revendication 3, 4 ou 5, **caractérisé en ce que** le premier axe de pivotement (44), le deuxième axe de pivotement (45) et le troisième axe de pivotement (46) sont alignés parallèlement l'un par rapport à l'autre.

7. Dispositif de verrouillage (1) selon l'une quelconque des revendications précédentes, **caractérisé en ce qu'**un dispositif à ressort (79) est associé au dispositif de libération (5) et au dispositif de verrou (4), lequel est réalisé pour une introduction de couples de rotation orientés en sens opposé sur le dispositif de libération (5) et le dispositif de verrou (4) et/ou qu'est associé au levier pivotant (3) un ensemble à ressort (42), qui est réalisé pour fournir un couple de rotation dirigé vers la position de libération sur le levier pivotant (3).

8. Dispositif de verrouillage (1 ; 81) selon l'une quelconque des revendications précédentes, **caractérisé en ce que** le levier pivotant (3 ; 83) repose dans la position de verrouillage par une première zone d'extrémité (25) sur une section de boîtier du boîtier de verrou (48 ; 92) et/ou que la saillie de verrou (64) du dispositif de verrou (4) repose dans la position de libération du dispositif de libération (5) sur une surface d'appui (78) disposée de manière adjacente à la troisième surface frontale (70) du dispositif de libération (5).

9. Dispositif de verrouillage (1 ; 81) selon l'une quelconque des revendications précédentes, **caractérisé en ce que** le levier pivotant (3 ; 83) peut être déplacé de la position de verrouillage dans la position de déverrouillage sans un mouvement du dispositif de verrou (4 ; 84) hors de la position de verrou et sans un mouvement du dispositif de libération (5) hors de la position de blocage lorsque la force de freinage exercée par la partie de verrou (52) soutenue par ressort est surmontée.

10. Dispositif de verrouillage (81) selon la revendication 1, 2, 3 ou 4, **caractérisé en ce que** le boîtier de verrou (92) est monté de manière mobile linéairement sur le corps de base (82) et qu'un moyen à ressort (86) soutenu par le corps de base (82) est réalisé pour fournir une force de ressort orientée en direction du dispositif de libération (5).

11. Dispositif de verrouillage (81) selon la revendication 10, **caractérisé en ce qu'**une première surface de commande (99) est réalisée sur le boîtier de verrou (92) et qu'une deuxième surface de commande (100) est réalisée sur le levier pivotant (83), qui sont réalisées pour une introduction d'un mouvement de compression sur le moyen à ressort (86) lors du transfert du levier pivotant (83) de la position de déverrouillage dans la position de verrouillage.

12. Dispositif de verrouillage (81) selon la revendication 10 ou 11, **caractérisé en ce que** la première surface de commande (99) est de forme cylindrique circulaire et qu'un axe central de la première surface de commande (99) est orienté parallèlement à l'axe central du premier dispositif de palier (30) et que la deuxième surface de commande (100) est réalisée comme un plan ou comme une section d'une surface extérieure cylindrique.
